# EUROPÄISCHE PATENTANMELDUNG

(11) **EP 3 131 152 A1**
(43) Veröffentlichungstag der Anmeldung: **15.02.2017**
(21) Anmeldenummer: 15180355.8
(22) Anmeldetag: 10.08.2015
(51) Int. Cl.: H01M 10/0567, H01M 10/0569, H01M 10/42, H01M 10/0525, H01M 10/0568

(54) **FLAMMWIDRIGE, PHOSPHORSÄUREESTER ENTHALTENDE BATTERIEELEKTROLYTE**

(71) Anmelder: LANXESS Deutschland GmbH, 50569 Köln (DE)
(72) Erfinder: KUCKERT, Eberhard, 51375 Leverkusen (DE); SCHMITZ, Raphael, 51373 Leverkusen (DE); HANSEL, Jan-Gerd, 51469 Bergisch Gladbach (DE); MAUERER, Otto, 47299 Leichlingen (DE)

(57) **Zusammenfassung**

Die Erfindung betrifft Batterieelektrolyte mit sehr geringer Entflammbarkeit, die insbesondere zum Einsatz in Lithium-Ionen-Batterien geeignet sind, Batterien enthaltend selbige Batterieelektrolyte, sowie die Verwendung bestimmter Phosphorsäureester in einer Menge von 30 bis 70 Gew.-% bezogen auf das Gesamtgewicht des flammwidrigen Elektrolten zur Herstellung der erfindungsgemäßen Batterieelektrolyte und Batterien.

## Beschreibung

Die Erfindung betrifft Batterieelektrolyte mit sehr geringer Entflammbarkeit, die insbesondere zum Einsatz in Lithium-Ionen-Batterien geeignet sind, Batterien enthaltend selbige Batterieelektrolyte, sowie die Verwendung bestimmter Phosphorsäureester zur Herstellung der erfindungsgemäßen Batterieelektrolyte und Batterien.

Lithium-Ionen Batterien haben aufgrund ihrer hohen Energiedichte, geringen Selbstentladung und hoher Lebensdauer eine herausragende Bedeutung für die Speicherung von elektrischer Energie für verschiedene Anwendungen erlangt. Dazu gehören Batterien für Geräte der Unterhaltungselektronik, Telekommunikation, Fotografie, aber auch für die Elektromobilität.

Der hohen Leistungsfähigkeit der Batterie stehen kritische Befunde hinsichtlich der Batteriesicherheit gegenüber, wie sie beispielsweise in den Übersichtsartikeln Dan Doughty, E. Peter Roth, "A General Discussion on Li-Ion Battery Safety", The Electrochemical Society Interface Summer, Vol 21, No.2 (2012), S. 37 - 44 und E. Peter Roth, Christopher J. Orendorff, "How Electrolytes Influence Battery Safety", The Electrochemical Society Interface Summer, Vol 21, No.2 (2012), S. 45- 49 beschrieben werden.

Elektrolyte für Lithium-Ionenbatterien bestehen typischerweise aus Gemischen von brennbaren Lösungsmitteln wie Diethylencarbonat (DEC), Dimethylcarbonat (DMC) oder Ethylencarbonat, in denen Leitsalze wie zum Beispiel Lithium-hexafluorophosphat (LiPF₆) nebst diversen Additiven gelöst sind.

Nach heutigem Stand der Technik werden gegen die verschiedenen Einflüsse, die einen Brand von Lithium-Ionen-Batterien auslösen können, verschiedene Sicherheitsvorkehrungen getroffen. Dies sind im Einzelnen:
- Batteriemanagement-Systeme zum Verhindern des Überladens der Batterie beispielsweise durch Anlegen falscher Spannung, thermische Überlastung und Lithium-Dendritenbildung.
- Einsatz von sogenannten Redox-Shuttle Additiven gegen Überladung
- Wahl von geeigneten Kathodenmaterialien wie zum Beispiel Lithiumeisenphosphat statt Lithiumkobaltoxid, wodurch Sauerstoffabspaltung vermieden wird
- Einhausung der Batterie mit mechanisch stabilen Materialien
- Separatoren-Optimierung durch Einsatz dickerer und reißfesterer Materialien, die robuster sind und somit Kurzschlüsse unwahrscheinlicher machen

Keine dieser Maßnahmen kann jedoch verhindern, dass es bei massiver mechanischer Beschädigung der Batterie unter dem Einfluß äußerer Zündquellen zu einer Entzündung kommt. Es ist daher vorteilhaft, schon auf Zellebene einen Brand zu verhindern, was z.B. durch den Einsatz eines nicht oder nur schwer entflammbaren Elektrolyten erreicht werden kann.

Dabei ist es wichtig, dass die elektrochemischen Eigenschaften des Elektrolyten möglichst wenig beeinflusst werden, um die Leistungsfähigkeit der Batterie in Hinblick zum Beispiel auf die erreichbare Ladezyklenzahl dabei nicht zu verschlechtern.

Um Elektrolyte flammwidrig auszurüsten, sind als Additive verschiedene Stoffe aus der Klasse der Phosphorverbindungen beschrieben worden. So wurden Phosphorsäureester wie Triphenylphosphat und Dikresylphenylphosphat bereits für diesen Zweck vorgeschlagen (siehe X. Xia, P. Ping, J. R. Dahn, Journal of the Electrochemical Society, 159 (9), A1460-A1466 (2012), E. Shim, T. Nam, J. Kim, H. Kim, S. Moon, Journal of Power Sources 172 (2007), 919 -924, R. Dunn, J. Kafle, F. Krause, C. Hwang, B. Ratnakumar, M. Smart, B. Lucht, Journal of the Electrochemical Society, 159 (12) A2100 - 2108 (2012) und D. Doughty, E. Roth, C. Crafts, G. Nagasubramanian, G. Henriksen, K. Amine, Journal of Power Sources, 146 (2005) 116 - 120).

Allerdings weisen die aus dem Stand der Technik bekannten Phosphorsäureesterhaltigen Elektrolytlösungen erhebliche Nachteile auf, die einer kommerziellen Nutzung bislang im Wege stehen.

So werden entweder nicht ausreichend flammwidrige Elektrolyte erhalten oder aber die Zyklisierungsfähigkeit der damit hergestellten elektrochemischen Zellen nimmt bereits nach wenigen Zyklen signifikant ab oder kann nur mit sehr hohen Konzentrationen an teuren sogenannten SEI-Schutzschichtbildnern kompensiert werden (SEI: solid electrolyte interphase).

Die Aufgabe der vorliegenden Erfindung bestand folglich darin, flammwidrige Elektrolyte bereitzustellen, die eine gute Zyklisierungsfähigkeit aufweisen.

Es wurden nun flammwidrige Elektrolyte gefunden, enthaltend
I) 30 bis 70 Gew.-%, vorzugsweise 40 bis 60 Gew.-%, besonders bevorzugt 40 bis 55 Gew.-% zumindest eines Phosphorsäureesters
II) 3 bis 18 Gew.-%, vorzugsweise 5 bis 15 Gew.-%, besonders bevorzugt 10 bis 13 Gew.-% zumindest eines Leitsalzes
III) zumindest ein Lösungsmittel ausgewählt aus der Gruppe bestehend aus Acetonitril, γ-Butyrolacton, Valerolacton, 1,3-Dioxolan, 4-Methyl-1,3-dioxolan, 1,4-Dioxolan, Ethylencarbonat, Propylencarbonat, Dimethylcarbonat, Diethylcarbonat, Ethylmethylcarbonat, Tetrahydrofuran, 2-Methyl-tetrahydrofuran, 1,2-Dimethoxyethan, 1,2-Diethoxyethan, Sulfolan, Methylsulfolan, Methyl-tert.-butylether und Ethylacetat,
wobei die Summe der Komponenten I) bis III) so gewählt ist, dass sie 90 bis 100 Gew.-%, vorzugsweise 93 bis 100 Gew.-% und besonders bevorzugt 95 bis 100 Gew.-% bezogen auf das Gesamtgewicht des flammwidrigen Elektrolytes beträgt und
wobei der flammwidrige Elektrolyt weiterhin 50 ppm oder weniger, vorzugsweise 20 ppm oder weniger an Wasser enthält und vorzugsweise zusätzlich 20 ppm Chlorid oder weniger, vorzugsweise 15 ppm Chlorid oder weniger.

Sofern nicht anders angegeben, beziehen sich Wassergehalte auf solche, die per Karl-Fischer-Titration bestimmt worden sind, die dem Fachmann bekannt ist und zum Beispiel in P. Bruttel, R. Schlink, "Wasserbestimmung durch Karl-Fischer-Titration", Metrohm Monographie 8.026.5001, 2003-06, oder G. Wieland, "Wasserbestimmung durch Karl Fischer-Titration", GIT Verlag Darmstadt, 1985, näher beschrieben wurde.

Sofern nicht anders angegeben beziehen sich Chlorid-Gehalte auf solche, die durch Ionenchromatographie bestimmt worden sind, die dem Fachmann bekannt ist und zum Beispiel in TU Bergakademie Freiberg, Fakultät der Chemie und Physik, Institut für Analytische Chemie aus März 2002 sowie die darin zitierte Literatur sowie in Lydia Terborg, Sascha Nowak, Stefano Passerini, Martin Winter, Uwe Karst, Paul R. Hadad, Pavel N. Nesterenko, Analytica Chimica Acta 714 (2012) 121-126 näher beschrieben wurde.

Sofern nicht anders angegeben, beziehen sich ppm-Gehalte auf Gewichts-ppm.

Bevorzugte flammwidrige Elektrolyte sind solche, die
I) 40 bis 60 Gew.-%, besonders bevorzugt 40 bis 55 Gew.-% zumindest eines Phosphorsäureesters
II) 5 bis 15 Gew.-%, besonders bevorzugt 10 bis 13 Gew.-% zumindest eines Leitsalzes
III) zumindest ein Lösungsmittel ausgewählt aus der Gruppe bestehend aus Acetonitril, γ-Butyrolacton Valerolacton, 1,3-Dioxolan, 4-Methyl-1,3-dioxolan, 1,4-Dioxolan, Ethylencarbonat, Propylencarbonat, Dimethylcarbonat, Diethylcarbonat, Ethylmethylcarbonat, Tetrahydrofuran, 2-Methyl-tetrahydrofuran, 1,2-Dimethoxyethan, 1,2-Diethoxyethan, Sulfolan, Methylsulfolan, Methyl-tert.-butylether und Ethylacetat enthalten, wobei der Gehalt an Lösungsmittels ausgewählt aus der Gruppe bestehend aus 1,3-Dioxolan, 4-Methyl-1,3-dioxolan 1,4-Dioxolan, Ethylencarbonat, Propylencarbonat mindestens 12 Gew.-%, vorzugsweise mindestens 15 Gew.-%, besonders bevorzugt 20 bis 50 Gew.-% und ganz besonders bevorzugt 30 bis 50 Gew.-% beträgt,
   wobei die Summe der Komponenten I) bis III) so gewählt ist, dass sie 90 bis 100 Gew.-%, vorzugsweise 93 bis 100 Gew.-% und besonders bevorzugt 95 bis 100 Gew.-% bezogen auf das Gesamtgewicht des flammwidrigen Elektrolytes beträgt und
   wobei der flammwidrige Elektrolyt bevorzugt 50 ppm oder weniger, vorzugsweise 20 ppm oder weniger AN Wasser und vorzugsweise weiterhin 20 ppm Chlorid oder weniger, vorzugsweise 15 ppm Chlorid oder weniger enthält.

Die erforderlichen Wasser- und gegebenenfalls Chlorid-Gehalte können insbesondere durch Einsatz von Phosphorsäureestern mit entsprechend niedrigen Wasser- und gegebenenfalls Chlorid-Gehalten erhalten werden, weshalb von der Erfindung weiterhin sowohl die Verwendung von Phosphorsäureestern mit einem Gehalt von 50 ppm oder weniger, vorzugsweise 20 ppm oder weniger an Wasser und vorzugsweise zusätzlich 20 ppm oder weniger, vorzugsweise 15 ppm oder weniger an Chlorid als Bestandteil von oder zur Herstellung von flammwidrigen Elektrolyten umfasst ist, als auch ein Verfahren zur Erhöhung der Flammwidrigkeit von Elektrolyten, dadurch gekennzeichnet, dass bei der Zubereitung der Elektolyte 30 bis 70 Gew.-%, vorzugsweise 40 bis 60 Gew.-%, besonders bevorzugt 40 bis 55 Gew.-% zumindest eines Phosphorsäureesters eingesetzt werden, wobei der oder die Phosphorsäureester in Summe 50 ppm oder weniger, vorzugsweise 20 ppm oder weniger an Wasser und vorzugsweise zusätzlich 20 ppm oder weniger, vorzugsweise 15 ppm oder weniger an Chlorid, jeweils bezogen auf die Summe des oder der Phosphorsäureester enthalten.

Überraschend hierbei ist, dass chlorid- und wasserarme Phosphorsäureester in den erfindungsgemäßen Mengen dem Elektrolyten zugesetzt werden können, so dass diese im Kleinbrennertest selbstverlöschend sind und trotzdem keinen oder keinen nennenswerten Verlust an Zyklisierungsfähigkeit aufweisen.

Bevorzugte Phosphorsäureester sind solche der Formel (I)

O=P(OR¹)(OR²)(OR³) (I)

worin die Reste R¹, R² und R³ jeweils unabhängig voneinander für einen linearen oder verzweigten C₁-C₈-Alkylrest, Phenyl oder ein, zwei oder dreifach mit linearen oder verzweigten C₁-C₄-Alkylresten substituiertes Phenyl bedeuten.

Besonders bevorzugte Phosphorsäureester sind ausgewählt aus der Gruppe bestehend aus Triphenylphosphat, Diphenylkresylphosphat, Diphenyl-(isopropylphenyl)phosphat, Diphenyl-(tert.-butylphenyl)phosphat, Dikresylphenylphosphat, Di-(isopropylphenyl)-phenylphosphat, Di-(tert.-butylphenyl)-phenylphosphat, Trikresylphosphat, Tri-(isopropylphenyl)-phosphat, Tri-(tert.-butylphenyl)-phosphat oder einer beliebigen Mischung der vorgenannten Phosphorsäureester.

Ganz besonders bevorzugte Phosphorsäureester sind ausgewählt aus der Gruppe bestehend aus Triphenylphosphat, Diphenylkresylphosphat, Dikresylphenylphosphat, Trikresylphosphat oder einer beliebigen Mischung der vorgenannten Phosphorsäureester.

Leitsalze umfassen alle dem Fachmann für den Einsatz in Batterien bekannte Leitsalze. Beispielsweise sind dies Lithium-hexafluorophosphat (LiPF₆), Lithium-tetrafluoroborat (LiBF₄), Lithium-hexafluoroarsenat (LiAsF₆), Lithium-hexafluoroantimonat (LiSbF₆), Lithium-bis-(trifluoromethansulfonyl)imid ( LiN(CF₃CF₂SO₂)₂), Lithium-perchlorat (LiClO₄), Liithium-bis(oxalato)borat (LiB(C₂O₄)₂), Lithium-fluorooxalatoborat (LiF₂(C₂O₄)), Lithium trifluoromethan-sulfonat (LiCF₃SO₃), Triethyl-methyl-ammonium-tetrafluoroborat , Tetraethyl-ammonium-tetrafluoroborat, Lithium-bis-(perfluorethylsulfonyl)imid (LiN(CF₃CF₂SO₂)₂), Lithium-tris(trifluoromethansulfonyl)methid (Li[C(CF₃SO₂)₃]), Lithium trifluorchlorborat (Li[BF₃Cl]), LiFNSFI (Li(N(SO₂F)(SO₂-n-C₄F₉)), Lithium-bisfluorsulfonylimid (LiN(SO₂F)₂), Lithium-pentafluorethantrifluoroborat (Li(F₅C₂BF₃)) und Lithium-difluorphosphat (LiPO₂F₂), einzeln oder in beliebiger Mischung, wobei Lithium-hexafluorophosphat (LiPF₆) bevorzugt ist.

Dem Fachmann ist klar, dass die erfindungsgemäßen Mengen von 3 bis 18 Gew.-%, vorzugsweise 5 bis 15 Gew.-%, besonders bevorzugt 10 bis 13 Gew.-% zumindest eines Leitsalzes je nach Typ des Leitsalzes und gewünschter Einsatztemperatur, dem eingesetzten Lösungsmittel und des Phosphorsäureesters nach oben begrenzt sein kann.

Zum Erreichen einer möglichst hohen Leitfähigkeit ist es in einer Ausführungsform bevorzugt, den Gehalt an Leitsalz so zu wählen, dass er zwischen 0,1 und 3 Gew.-%, vorzugsweise zwischen 0,2 und 1,5 Gew.-% unterhalb der Löslichkeit des Leitsalzes im flammwidrigen Elektrolyten bei 20°C liegt.

In einer bevorzugten Ausführungsform der Erfindung enthalten die erfindungsgemäßen Elektrolyte weiterhin von 0,001 bis 5 Gew.-%, besonders bevorzugt 0,1 bis 3 und ganz besonders bevorzugt 1 bis 2,5 Gew.-% bezogen auf das Gesamtgewicht des flammwidrigen Elektrolyten an Additiven zur Verringerung des schleichenden Kapazitätsverlusts.

Solche Additive sind beispielsweise ausgewählt aus der Gruppe bestehend aus Fluorethylencarbonat (FEC, (4-Fluor-1,3-dioxolan-2-one), Vinylencarbonat (VC), Ethylensulfit, Styrol, Vinylpyridin, Trifluorpropylencarbonat, Fluor-gamma-butyrolacton und Phenlyvinylencarbonat, jeweils einzeln oder in beliebiger Mischung, wobei Fluorethylencarbonat und Vinylencarbonat jeweils einzeln oder in Mischung bevorzugt und Fluorethylencarbonat besonders bevorzugt ist.

Die erfindungsgemäßen Elektrolyte eignen sich insbesondere zum Einsatz in Akkumulatoren, weshalb von der Erfindung auch Akkumulatoren enthaltend die erfindungsgemäßen Elektrolyte umfasst sind.

Die erfindungsgemäßen Akkumulatoren eignen sich insbesondere zum Einsatz in elektrisch betriebene Geräte und Fahrzeuge, weshalb von der Erfindung auch elektrisch betriebene Geräte und Fahrzeuge enthaltend die erfindungsgemäßen Elektrolyte bzw. erfindungsgemäßen Akkumulatoren umfasst sind.

Elektrisch betriebene Geräte umfassen beispielsweise elektronische Geräte wie Computer, Notebooks, Laptops, Telekommunikationsgeräte wie Mobiltelefone, und Funkgeräte, Haushaltsgeräte wie Rührer, Waagen, Staubsauger, elektrische Zahnbürsten und Aufschäumer, optische Geräte wie Kameras, Belichtungsmesser, Laserentfernungsmesser, Werkzeuge wie Bohrmaschinen, Schrauber, Schleifer und Sägen. Weiterhin Gartengeräte (Rasenmäher, Gartenscheren) sowie Energiespeicher für alle Arten der Notstromversorgung und zur Speicherung von aus Solar- und, wasser- und Windkraft.

Elektrisch betriebene Fahrzeuge umfassen beispielsweise schienengebundene Fahrzeuge wie Lokomotiven, Triebwagen und Rangierroboter, Luftfahrzeuge wie Flugzeuge, Drohnen und Helikopter, Personen- und Lastwagen, Zwei- und -Dreiräder, Kettenfahrzeuge sowie Wasserfahrzeuge. Dazu gehören auch deren jeweilige Hybridvarianten.

Die nachstehenden Beispiele erläutern die Erfindung, ohne sie jedoch darauf zu beschränken.

### Beispiele

Beispiel 1: Es wurde ein flammwidriger Elektrolyt folgender Zusammensetzung hergestellt : Eine 1 molare LiPF₆ -Lösung in einer 1:1 Mischung nach Gewicht aus Ethylencarbonat und "Disflamoll® DPK" der Firma Lanxess Deutschland GmbH, welches im Wesentlichen eine Mischung aus Triphenylphosphat, Diphenylkresylphosphaten, Dikresylphenylphosphaten und Trikresylphosphaten ist.

Der Elektrolyt enthielt folglich:
I) 44,63 Gew.-% an den vorgenannten Phosphorsäureestern
II) 10,74 Gew.-% Lithiumhexafluorophosphat als Leitsalz
III) 44,63 Gew.-% Ethylencarbonat als Lösungsmittel

### Beispiel 2

Es wurde ein flammwidriger Elektrolyt folgender Zusammensetzung hergestellt :
(alle Mengenangaben in Gewichts-% bezogen auf den gesamten Elektrolyten)
95 g einer Mischung aus 50 Gew.-% Ethylencarbonat und 50 Gew.% einer kommerziellen Arylphosphatmischung wurden mit 5 g Fluorethylencarbonat gemischt. Anschließend wurde mit dieser Lösung eine 1 molare LiPF₆ -Lösung hergestellt."

Als Arylphosphatmischung wurde das Produkt "Disflamoll® DPK" der Firma Lanxess Deutschland GmbH eingesetzt.

Der Elektrolyt enthielt folglich:
I) 42,43 Gew.-% an den vorgenannten Phosphorsäureestern
II) 10,67 Gew.-% Lithiumhexafluorophosphat als Leitsalz
III) 42,43 Gew.-% Ethylencarbonat als Lösungsmittel und
IV) 4,47 Gew.-% an Fluorethylencarbonat als Additiv zur Verringerung des schleichenden Kapazitätsverlusts

Der Wassergehalt des Elektrolyten wurde durch Karl-Fischer-Titration ermittelt und betrug 9,0 ppm, der Chlorid-Gehalt wurde durch Ionenchromatographie bestimmt und betrug 3,0 ppm. Die Leitfähigkeit des Elektrolyten betrug bei 20 °C 2,05 mS cm-1.

### Beispiele 3 bis 7:

Analog zu Beispiel 2 wurden weitere flammwidrige Elektrolyten hergestellt, deren Zusammensetzungen aus Tabelle 1 hervorgehen:

| Beispiel | Phosphorester [Gew.-%] | Leitsalz (LiPF₆) [Gew.-%] | Lösungsmittel (EC, EC/DMC) [Gew.-%] | Additiv (FEC) [Gew.-%] |
|---|---|---|---|---|
| **3** (1M LiPF6 EC:DPK*:DMC:FEC [42.5:42.5:10:5]) | 38 | 11 | 47 | 4 |
| **4** (1M LiPF6 EC:DPK*:DMC:FEC [40:40:15:5]) | 36 | 11 | 49 | 4 |
| **5** (1M LiPF6 EC:51092**:FEC [47.5:47.5:5]) | 42 | 11 | 43 | 4 |
| **6** (1M LiPF6 EC:51070***:FEC [47.5:47.5:5]) | 42 | 11 | 42 | 4 |
| **7** (1M LiPF6 EC:TP****:FEC [47.5:47.5:5]) | 42 | 11 | 42 | 4 |
| **8** (1M LiPF6 EC:TKP-P*****:FEC [47.5:47.5:5]) | 42 | 11 | 42 | 4 |

| | | | | |
|---|---|---|---|---|
| *: Disflamoll® DPK: Mischung aus Triphenylphosphat, Diphenylkresylphosphat, Dikresylphenylphosphat und Trikresylphosphat **: Disflamoll ® TP LXS 51092: (tert.-Butylphenyldiphenylphosphat ***: Disflamoll ® TP LXS 51070: (Isopropylphenyldiphenylphosphat) ****: Disflamoll ® TP (Triphenylphosphat) *****: Disflamoll® TKP-P: Mischung aus Triphenylphosphat, Diphenylkresylphosphat, Dikresylphenylphosphat und Trikresylphosphat | | | | |

Alle Disflamoll ®-Produkte sind über die Firma Lanxess Deutschland GmbH kommerziell verfügbar.

### Kleinbrennertests:

Der Selbstlöschtest (self extinguishing test, SET) wurde in einer Apparatur durchgeführt, bei der ein Zellseparator (Glasfaserfilter Whatman® Glassfiber Filter GF/D, vorab getrocknet bei 300°C) mit einem Durchmesser von 25mm mit 500 µL des flammwidrigen Elektrolyten gemäß den Beispielen 1 bis 8 getränkt wurde. Der Zellseparator wurde dann in einer geschlossenen Box von einem Greifarm für zwei Sekunden in eine Gasflamme mit einer Länge von ca 5 cm und anschließend zu Sensoren geführt, die die Brenndauer ermitteln. Das Experiment wurde für jeden flammwidrigen Elektrolyten insgesamt 8 mal durchgeführt.

Der gleiche Test wurde mit einem kommerziellen Standardelektrolyt (1M LiPF₆ in Ethylencarbonat / Diethylcarbonat 1:1, gewichtsanteilig, Firma UBE) durchgeführt: Beispiel 9

Die Ergebnisse der Kleinbrennerteste sind in Tabelle 2 dargestellt:

| Elektrolyt aus Beispiel | Leitfähigkeit bei 25 °C [mS cm-1] | Wassergehalt/ Chloridgehalt [ppm] | Flammpunkt [°C] | Entzündbarkeit |
|---|---|---|---|---|
| 1 | 2,00 | 9,0 /3,0 | >150 | keine |
| 2 | 2,05 | 9,0 / 3,0 | >150 | keine |
| 3 | 2.80 | 42.6 / 5,0 | 60 | keine |
| 4 | 2.91 | 22.1/ 6,0 | 52 | keine |
| 5 | 1.54 | 16.8/ 3,0 | >150 | keine |
| 6 | 1.66 | 19.4/ 4,0 | >150 | keine |
| 7 | 1.96 | 16.8/ 9,0 | >150 | keine |
| 8 | 1.59 | 24.2/ 5,0 | >150 | keine |
| 9 (zum Vergleich) | 7,0 | 11 / 1 | 30°C | 35 bis 40 s |

### Definition Entzündbarkeit:

Bei Elektrolyten mit einer Brenndauer von unter 1 Sekunde wurde in der Spalte "Entzündbarkeit" der Wert "keine" eingetragen.

### Durchgeführte elektrochemische Messungen :

Für die Elektrolyten wurden Leitfähigkeitsmessungen sowie galvanostatische /potentiostatische Zyklisierungen durchgeführt. Dabei wurden die Elektrolyte gemäß den Beispielen 1 und 2 verwendet.

### Leitfähigkeitsbestimmung:

Für die Impedanzmessungen zur Bestimmung der Leitfähigkeit wurde ein 1287 A Potentiostat der Firma Solatron Analytical Solartron 1260A Impedance/Gain-Phase Analyzer (FRA) verwendet. Die verwendeten Elektroden für die Messungen waren platinierte Platinelektroden der Firma Amel srl. Zur temperaturabhänigen Messung wurde eine Binder MK53 Klimakammer verwendet. Das Impedanzspektrum war zwischen 2 kHz und 200 kHz angesiedelt.

### Galvanostatische/ Potentiostatische Zyklisierung:

Die Elektrolytlösungen gemäß der Beispiele 1 und 2 wurden in Swagelok™ T-Stück-Zellen vermessen. Dabei wurde Timcal T44 Graphit als Arbeitselektrode und Li als Gegenelektrode und Referenzelektrode verwendet. Als Separator zwischen den Elektroden diente Freudenberg Vlies. Der Testplan bestand aus drei Zyklen mit C/5 und anschließen 100 Zyklen mit C/5 kombiniert mit einem Konstantspannungsschritt nach dem Entladen, bei 0,025 V vs. Li/Li⁺. Die Messungen wurden an einem Maccor Series 4000 durchgeführt.

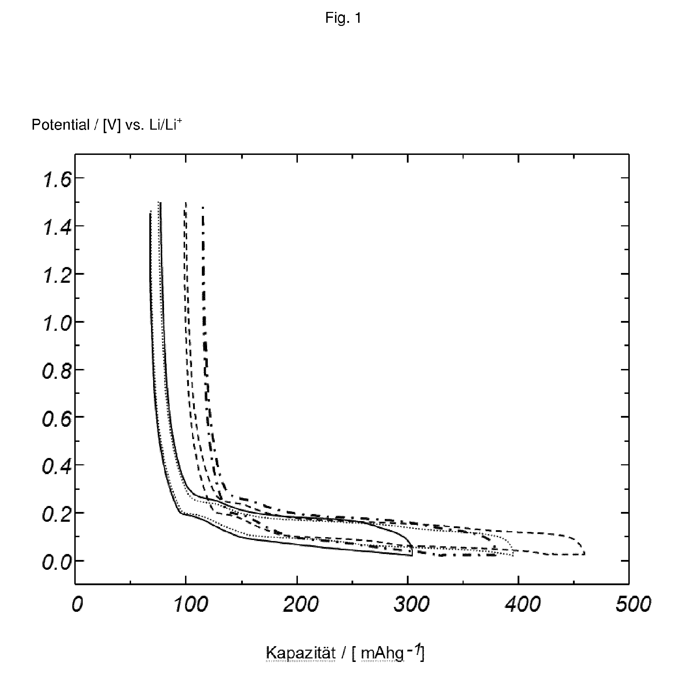

Die Vergleiche der Potentialverläufe der Elektrolyte gemäß der Beispiele 1 und 2 sind in Fig. 1 wiedergegeben.

Dabei zeigen:

| | | |
|---|---|---|
| 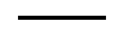 | 2. Zyklus | Elektrolyt gemäß Beispiel 1 |
| 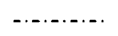 | 10. Zyklus | Elektrolyt gemäß Beispiel 1 |
| 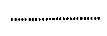 | 2. Zyklus | Elektrolyt gemäß Beispiel 2 |
| -------- | 10. Zyklus | Elektrolyt gemäß Beispiel 2 |

Aus Fig. 1 wird deutlich, dass eine konstante und effiziente Zyklisierung insbesondere in Kombination mit dem Additiv (FEC) und Raten von < 1C erzielt wird.

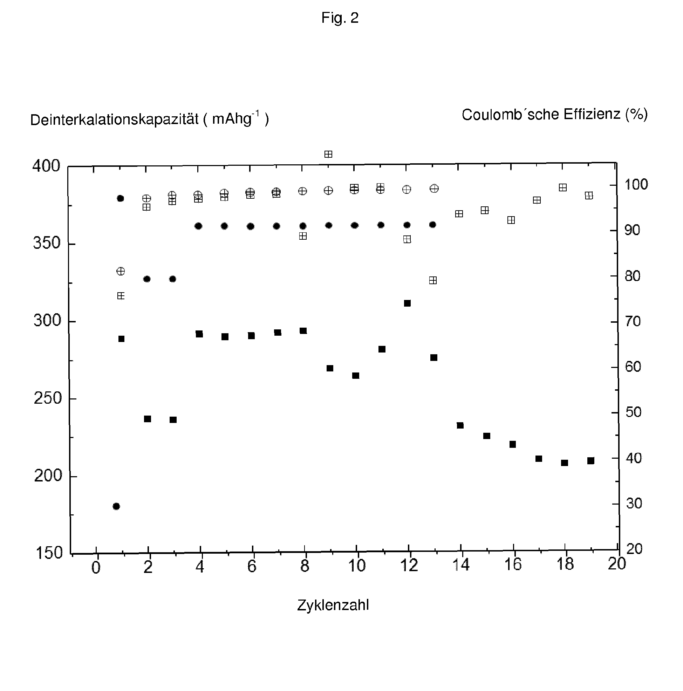

Fig. 2 zeigt den Vergleich der Kapazitäten von T44 Graphit Elektroden in Swagelok-Halbzellen, zyklisiert mit einem Elektrolyten gemäß Beispiel 1 (Quadrate). Die runden Punkte entsprechen den Ergebnissen mit einem Elektrolyten gemäß Beispiel 2. Sie erreichen eine noch höhere Effizienz und eine bessere Kapazitätsretention.

Im Detail zeigen:

| | |
|---|---|
| ■ | Deinterkalationskapazität Elektrolyt gemäß Beispiel 1 |
| 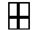 | Effizienz Elektrolyt gemäß Beispiel 1 |
| ● | Deinterkalationskapazität Elektrolyt gemäß Beispiel 2 |
| ⊕ | Effizienz Elektrolyt gemäß Beispiel 2 |

### Weitere Zyklisierunastests mit Mischungen gemäß den Beispielen 3 bis 8:

Für diese Zyklisierungsuntersuchungen wurden 3-Elektroden Swagelok Zellen unter Argonatmosphäre angefertigt. Die Graphit-Anodentest wurden mit dem Graphit T44 in einer Schichtdicke von 130 µm als Anode gegen überdimensionierte LFP Kathoden (Li-Quelle) durchgeführt (WE: Graphit, CE:LFP, RE:Li) im Potentialbereich: zwischen 1.5 - 0.025 V durchgeführt.

Der Testplan für diese Zyklisierung lautete:
- 3 Formierungszyklen C/5
- 20 Zyklen C/5 mit 1h Constant Voltage Step
- 20 Zyklen C/2 mit 1 h Constant Voltage Step
- 20 Zyklen C/5 mit 1 h Constant Voltage Step
- 20 Zyklen 1 C mit 1 h Constant Voltage Step

Dabei steht C für die current bzw. charge rate und spiegelt den Strombedarf wider, der nötig ist, um den Akkumulator innerhalb von einer Stunde komplett zu laden. Ein Rate von C/5 entspräche demnach einer vollständigen Ladedauer von 12 min.

Tabelle 2 zeigt die Coulomb'schen Effizienzwerte (Eff) der untersuchten Elektrolyte des 1., 20., 40. und 72. Zyklus für die jeweiligen Elektrolyte auf.

**Tabelle 2:**

| Elektrolyt aus Beispiel... | Eff #1 | Eff #20 | Eff #40 | Eff #72 |
|---|---|---|---|---|
| 3 | 83,3 | 99,7 | 99,9 | 99,9 |
| 4 | 82,0 | 99,5 | 99,8 | 99,9 |
| 5 | 71,1 | 98,9 | 99,3 | 99,2 |
| 6 | 96,9 | 99,5 | 97,7 | 98,1 |
| 7 | 76,5 | 98,9 | 99,6 | 99,8 |
| 8 | 79,7 | 98,9 | 99,9 | 97,4 |

### Ergebnis :

Es zeigen sich sehr gute Effizienzwerte, insbesondere bei Verwendung von Disflamoll ® DPK.

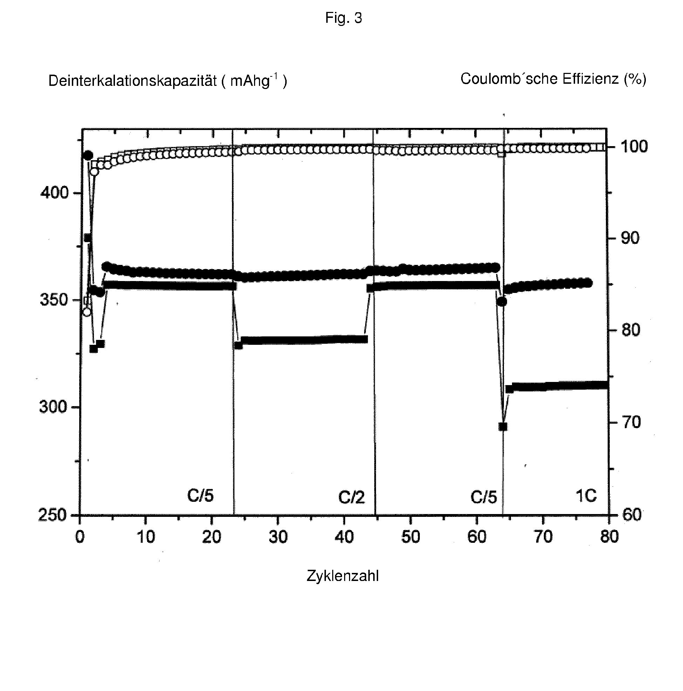

Das Zyklisierverhalten der Elektrolyte gemäß den Beispielen 3 (Quadrate) und 4 (Kreise) mit DPK in einer Zelle bestehend aus Graphit und LFP sind im Fig. 3 abgebildet.

Im Detail zeigen

| | |
|---|---|
| ■ | Deinterkalationskapazität Elektrolyt gemäß Beispiel 3 |
| □ | Effizienz Elektrolyt gemäß Beispiel 3 |
| ● | Deinterkalationskapazität Elektrolyt gemäß Beispiel 4 |
| ○ | Effizienz Elektrolyt gemäß Beispiel 4 |

Es ist erkennbar, dass sowohl die Anfangskapazität als auch die Zyklenstabilität mit höherem Anteil DMC im Elektrolyten besser ist als mit weniger DMC im Elektrolyten.

## Patentansprüche

1. Flammwidriger Elektrolyt, enthaltend
I) 30 bis 70 Gew.-%, vorzugsweise 40 bis 60 Gew.-%, besonders bevorzugt 40 bis 55 Gew.-% zumindest eines Phosphorsäureesters und
II) 3 bis 18 Gew.-%, vorzugsweise 5 bis 15 Gew.-%, besonders bevorzugt 10 bis 13 Gew.-% zumindest eines Leitsalzes und
III) zumindest ein Lösungsmittel ausgewählt aus der Gruppe bestehend aus Acetonitril, γ-Butyrolacton, Valerolacton, 1,3-Dioxolan, 4-Methyl-1,3-dioxolan, 1,4-Dioxolan, Ethylencarbonat, Propylencarbonat, Dimethylcarbonat, Diethylcarbonat, Ethylmethylcarbonat, Tetrahydrofuran, 2-Methyl-tetrahydrofuran, 1,2-Dimethoxyethan, 1,2-Diethoxyethan, Sulfolan, Methylsulfolan, Methyl-tert.-butyl-ether und Ethylacetat enthält,
wobei die Summe der Komponenten I) bis III) so gewählt ist, dass sie 90 bis 100 Gew.-%, vorzugsweise 93 bis 100 Gew.-% und besonders bevorzugt 95 bis 100 Gew.-% bezogen auf das Gesamtgewicht des flammwidrigen Elektrolytes beträgt und
wobei der flammwidrige Elektrolyt weiterhin 50 ppm oder weniger, vorzugsweise 20 ppm oder weniger an Wasser enthält.

2. Flammwidriger Elektrolyt nach Anspruch 1, **dadurch gekennzeichnet, dass** er 20 ppm Chlorid oder weniger, vorzugsweise 15 ppm Chlorid oder weniger enthält.

3. Flammwidriger Elektrolyt nach Anspruch 1 oder 2, **dadurch gekennzeichnet, dass** er
I) 40 bis 60 Gew.-%, besonders bevorzugt 40 bis 55 Gew.-% zumindest eines Phosphorsäureesters
II) 5 bis 15 Gew.-%, besonders bevorzugt 10 bis 13 Gew.-% zumindest eines Leitsalzes
III) zumindest ein Lösungsmittel ausgewählt aus der Gruppe bestehend aus Acetonitril, γ-Butyrolacton, Valerolacton, 1,3-Dioxolan, 4-Methyl-1,3-dioxolan, 1,4-Dioxolan, Ethylencarbonat, Propylencarbonat, Dimethylcarbonat, Diethylcarbonat, Ethylmethylcarbonat, Tetrahydrofuran, 2-Methyl-tetrahydrofuran, 1,2-Dimethoxyethan, 1,2-Diethoxyethan, Sulfolan, Methylsulfolan, Methyl-tert.-butyl-ether und Ethylacetat enthält wobei der Gehalt an Lösungsmittels ausgewählt aus der Gruppe bestehend aus 1,3- Dioxolan, 4-Methyl-1,3-dioxolan 1,4-Dioxolan, Ethylencarbonat, Propylencarbonat mindestens 12 Gew.-%, vorzugsweise mindestens 15 Gew.-%, besonders bevorzugt 15 bis 50 Gew.-% und ganz besonders bevorzugt 20 bis 50 Gew.-% beträgt,
wobei die Summe der Komponenten I) bis III) so gewählt ist, dass sie 90 bis 100 Gew.-%, vorzugsweise 93 bis 100 Gew.-% und besonders bevorzugt 95 bis 100 Gew.-% bezogen auf das Gesamtgewicht des flammwidrigen Elektrolytes beträgt und
50 ppm oder weniger, vorzugsweise 20 ppm oder weniger an Wasser enthält:

4. Flammwidriger Elektrolyt nach Anspruch 3, **dadurch gekennzeichnet, dass** er 20 ppm Chlorid oder weniger, vorzugsweise 15 ppm Chlorid oder weniger enthält.

5. Flammwidriger Elektrolyt nach einem der Ansprüche 1 bis 4, **dadurch gekennzeichnet, dass** Phosphorsäureester solche der Formel (I) sind:
O=P(OR¹)(OR²)(OR³) (I)
worin die Reste R¹, R² und R³ jeweils unabhängig voneinander für einen linearen oder verzweigten C₁-C₈-Alkylrest, Phenyl oder ein, zwei oder dreifach mit linearen oder verzweigten C₁-C₄-Alkylresten substituiertes Phenyl bedeuten.

6. Flammwidriger Elektrolyt nach einem der Ansprüche 1 bis 5, **dadurch gekennzeichnet, dass** Phosphorsäureester ausgewählt sind aus der Gruppe bestehend aus Triphenylphosphat, Diphenylkresylphosphat, Diphenyl-(isopropylphenyl)phosphat, Diphenyl-(tert.-butylphenyl)phosphat, Dikresylphenylphosphat, Di-(isopropylphenyl)-phenylphosphat, Di-(tert.-butylphenyl)-phenylphosphat, Trikresylphosphat, Tri-(isopropylphenyl)-phosphat, Tri-(tert.-butylphenyl)-phosphat oder einer beliebigen Mischung der vorgenannten Phosphorsäureester.

7. Flammwidriger Elektrolyt nach einem der Ansprüche 1 bis 6, **dadurch gekennzeichnet, dass** die Leitsalze ausgewählt sind aus der Gruppe bestehend aus Lithium-hexafluorophosphat (LiPF₆), Lithium-tetrafluoroborat (LiBF₄), Lithium-hexafluoroarsenat (LiAsF₆), Lithium-hexafluoroantimonat (LiSbF₆), Lithium-bis-(trifluoromethansulfonyl)imid ( LiN(CF₃CF₂SO₂)₂), Lithium-perchlorat (LiClO₄), Liithium-bis(oxalato)borat (LiB(C₂O₄)₂), Lithium-fluorooxalatoborat (LiF₂(C₂O₄)), Lithium trifluoromethan-sulfonat (LiCF₃SO₃), Triethyl-methyl-ammonium-tetrafluoroborat , Tetraethyl-ammonium-tetrafluoroborat, Lithium-bis-(perfluorethylsulfonyl)imid (LiN(CF₃CF₂SO₂)₂), Lithium-tris(trifluoromethansulfonyl)methid (Li[C(CF₃SO₂)₃]), Lithium trifluorchlorborat (Li[BF₃Cl]), LiFNSFI (Li(N(SO₂F)(SO₂-n-C₄F₉)), Lithium-bisfluorsulfonylimid (LiN(SO₂F)₂), Lithium-pentafluorethantrifluoroborat (Li(F₅C₂BF₃)) und Lithium-difluorphosphat (LiPO₂F₂), einzeln oder in beliebiger Mischung, wobei Lithium-hexafluorophosphat (LiPF₆) bevorzugt ist.

8. Flammwidriger Elektrolyt nach einem der Ansprüche 1 bis 7, **dadurch gekennzeichnet, dass** er weiterhin von 0,001 bis 5 Gew.-%, besonders bevorzugt 0,1 bis 3 Gew.-% und ganz besonders bevorzugt 1 bis 2,5 Gew.-% bezogen auf das Gesamtgewicht des flammwidrigen Elektrolyten an Additiven zur Verringerung des schleichenden Kapazitätsverlusts enthält.

9. Flammwidriger Elektrolyt nach Anspruch 8, **dadurch gekennzeichnet, dass** die Additive ausgewählt sind aus der Gruppe bestehend aus Fluorethylencarbonat (FEC, (4-Fluor-1,3-dioxolan-2-on), Vinylencarbonat (VC), Ethylensulfit, Styrol, Vinylpyridin, Trifluorpropylencarbonat, Fluor-gamma-butyrolacton und Phenlyvinylencarbonat, jeweils einzeln oder in beliebiger Mischung, wobei Fluorethylencarbonat und Vinylencarbonat jeweils einzeln oder in Mischung bevorzugt und Fluorethylencarbonat besonders bevorzugt ist.

10. Verwendung von Phosphorsäureestern mit einem Gehalt von 50 ppm oder weniger, vorzugsweise 20 ppm oder weniger an Wasser und vorzugsweise zusätzlich 20 ppm oder weniger, vorzugsweise 15 ppm oder weniger an Chlorid als Bestandteil von oder zur Herstellung von flammwidrigen Elektrolyten.

11. Verfahren zur Erhöhung der Flammwidrigkeit von Elektrolyten, **dadurch gekennzeichnet, dass** bei der Zubereitung der Elektolyte 30 bis 70 Gew.-%, vorzugsweise 40 bis 60 Gew.-%, besonders bevorzugt 40 bis 55 Gew.-% zumindest eines Phosphorsäureesters eingesetzt werden, wobei der oder die Phosphorsäureester in Summe 50 ppm oder weniger, vorzugsweise 20 ppm oder weniger an Wasser und vorzugsweise zusätzlich 20 ppm oder weniger, vorzugsweise 15 ppm oder weniger an Chlorid, jeweils bezogen auf die Summe des oder der Phosphorsäureester enthalten.

12. Verwendung von flammwidrigen Elektrolyten nach einem der Ansprüche 1 bis 9 in Akkumulatoren.

13. Akkumulator, insbesondere Li-Ionen-Akkumulator enthaltend einen flammwidrigen Elektrolyten nach einem der Ansprüche 1 bis 9.

14. Elektrisch betriebene Geräte und Fahrzeuge enthaltend einen flammwidrigen Elektrolyten nach einem der Ansprüche 1 bis 9 oder einen Akkumulator nach Anspruch 13.

15. Elektrisch betriebene Geräte und Fahrzeuge nach Anspruch 14, **dadurch gekennzeichnet dass** es sich um Computer, Notebooks, Laptops, Telekommunikationsgeräte wie Mobiltelefone, und Funkgeräte, Haushaltsgeräte wie Rührer, Waagen, Staubsauger, elektrische Zahnbürsten und Aufschäumer, optische Geräte wie Kameras, Belichtungsmesser, Laserentfernungsmesser, Werkzeuge wie Bohrmaschinen, Schrauber, Schleifer und Sägen. Weiterhin Gartengeräte (Rasenmäher, Gartenscheren) sowie Energiespeicher für alle Arten der Notstromversorgung und zur Speicherung von aus Solar- und, wasser- und Windkraft einerseits bzw. schienengebundene Fahrzeuge wie Lokomotiven, Triebwagen und Rangierroboter, Luftfahrzeuge wie Flugzeuge, Drohnen und Helikopter, Personen- und Lastwagen, Zwei- und -Dreiräder, Kettenfahrzeuge sowie Wasserfahrzeuge einschließlich ihrer jeweiligen Hybridvarianten andererseits handelt.
